# EUROPEAN PATENT APPLICATION

(11) **EP 4 844 220 A1**
(43) Date of publication of application: **25.11.2026**
(21) Application number: 25305719.4
(22) Date of filing: 20.05.2025
(51) Int. Cl.: F02K 1/72, F02K 1/76

(54) **LOCK SYSTEM FOR THRUST REVERSER COMPONENTS IN AN AIRCRAFT**

(71) Applicant: Rohr, Inc., Chula Vista, CA 91910-2098 (US)
(72) Inventor: SERRE, Robinson, 31774 Colomiers (FR); BUCHET, Damien, 31774 Colomiers (FR); TREZIERES, Marlene Marcelle Simone, 31774 Colomiers (FR)
(74) Representative: Dehns

(57) **Abstract**

There is provided a lock system (100, 300) for locking a component of an aircraft thrust reverser, the lock system comprising a lock member (102, 302) configured to be moveable with the component in a first direction (104, 304) towards an open position and in a second direction (106, 306) towards a closed position; and a lever (108, 308) pivotable between a locked position and an unlocked position, wherein the lever comprises a lever locking surface (116, 316) at a distal end (119, 319) thereof, wherein the lock member comprises a protrusion having a sloped contact surface (112, 312), wherein, when the lever is in the locked position and during an unwanted deployment of the lock member from the closed position, the lever locking surface is configured to engage with the sloped contact surface so as to limit movement of the lock member towards the open position, and wherein, when the lever is in the unlocked position, the lever is configured to disengage from the lock member permitting movement of the lock member towards the open position.

## Description

### TECHNICAL FIELD

The present disclosure relates generally to lock systems and in particular to lock systems for thrust reverser components used in an aircraft (e.g. translating thrust reverser cowls).

### BACKGROUND

The present disclosure relates generally to lock systems and in particular to tertiary lock systems for thrust reverser components used in an aircraft (e.g., translating thrust reverser cowls).

Thrust reversers are provided on jet engines typically to increase the amount of braking on an aircraft upon landing. When deployed, a thrust reverser will change the direction of thrust of the jet engine such that some or all of the thrust is directed forwards, which acts to slow the aircraft so that it can then taxi off the runway.

There are a number of types of thrust reverser, all of which must be stowed during normal aircraft operation, for example so that the thrust reverser cannot be deployed during take-off or at a cruise altitude and can only be deployed during landing. In order to ensure this, one or more lock members are provided to prevent unwanted deployment of the thrust reverser, and in particular the actuators that move the various parts of the thrust reverser assembly.

Most thrust reverser systems include primary and tertiary locks. Although this may depend on the particular configuration, two primary locks are typically coupled to the actuators of the thrust reverser and the tertiary lock may be coupled directly to a thrust reverser component (e.g., a translating cowl).

It is desired to provide a lock system that has an improved load distribution than a conventional hook lock and a reduced required driving size load than a conventional blade lock.

### SUMMARY

According to an aspect of the disclosure, there is provided a lock system for locking a component of an aircraft thrust reverser. The lock system comprises: a lock member configured to be moveable with the component in a first direction towards an open position and in a second direction towards a closed position; and a lever pivotable between a locked position and an unlocked position, wherein the lever comprises a lever locking surface at a distal end thereof, wherein the lock member comprises a protrusion having a sloped contact surface, wherein, when the lever is in the locked position and during an unwanted deployment of the lock member from the closed position, the lever locking surface is configured to engage with the sloped contact surface so as to limit movement of the lock member towards the open position, and wherein, when the lever is in the unlocked position, the lever is configured to disengage from the lock member permitting movement of the lock member towards the open position.

The lever may be pivotable about an axis of rotation and may extend outwardly therefrom in a radial direction.

The lever locking surface may extend approximately perpendicular to the radial direction.

The sloped contact surface may be a first sloped contact surface facing the first direction.

The lock system may further comprise a beam wherein the lever is pivotably mounted to the beam; and wherein the lock member may be moveable relative to the beam in the first and second directions.

The protrusion may comprise a second sloped contact surface facing the second direction.

The lock system may further comprise a rotary drive configured to pivot the lever.

The rotary drive may comprise: a solenoid or electromagnet; a shaft; and a target rotatably coupled to the lever, wherein activation of the solenoid or electromagnet causes the shaft to extend and rotate the target so as to pivot the lever.

The lock system may further comprise a biasing member configured to bias the lever into the locked position.

The rotary drive may be configured to pivot the lever into the unlocked position.

The lock system may further comprise: a biasing member configured to bias the lever into the unlocked position; and a brake assembly configured to hold the lever in the locked position when the brake assembly is engaged.

The lock system may further comprise: a lever cam extending from the lever; and a roller movable with the lock member along a path parallel to the first direction, wherein, when the lock member moves in the second direction towards the closed position, the roller pushes against the lever cam causing the lever to pivot into the locked position.

The lock system may further comprise: one or more position sensors; and a control unit to detect via the one or more position sensors a position of the lever.

The lock system may be a primary or tertiary lock for an aircraft thrust reverser.

According to an aspect of the disclosure, there is provided a thrust reverser assembly comprising the lock system as described above.

### BRIEF DESCRIPTION OF DRAWINGS

Certain examples of the disclosure will now be described by way of example only and with reference to the accompanying drawings in which:
Figure 1 is a schematic representation of a thrust reverser assembly;
Figure 2A is a section view of a lock system in a locked position according to an example of the disclosure;
Figure 2B is a section view of the lock system of Figure 2A during an unlocking phase;
Figure 2C is a section view of the lock system of Figure 2A in an unlocked position;
Figure 2D is a section view of the lock system of Figure 2A during an unwanted deployment;
Figure 3A is an isometric rear view of a lock system according to an example of the disclosure;
Figure 3B is an isometric front view of the lock system of Figure 3A;
Figure 4A is an isometric view of a second lock system according to an example of the disclosure;
Figure 4B is a magnified isometric view of the brake assembly of the lock system of Figure 4A;
Figure 5A is a section view of the brake assembly of Figure 4B when the brake assembly is engaged;
Figure 5B is a section view of the brake assembly of Figure 4B when the brake assembly is disengaged;
Figure 6A is a schematic side view of part of the lock system of Figure 4A in a locked position;
Figure 6B is a schematic side view of the lock system of Figure 4A during an unlocking phase;
Figure 6C is a schematic side view of the lock system of Figure 4A during an unlocking phase;
Figure 6D is a schematic side view of the lock system of Figure 4A in an unlocked position; and
Figure 6E is a schematic side view of the lock system of Figure 4A during an unwanted deployment.

### DETAILED DESCRIPTION

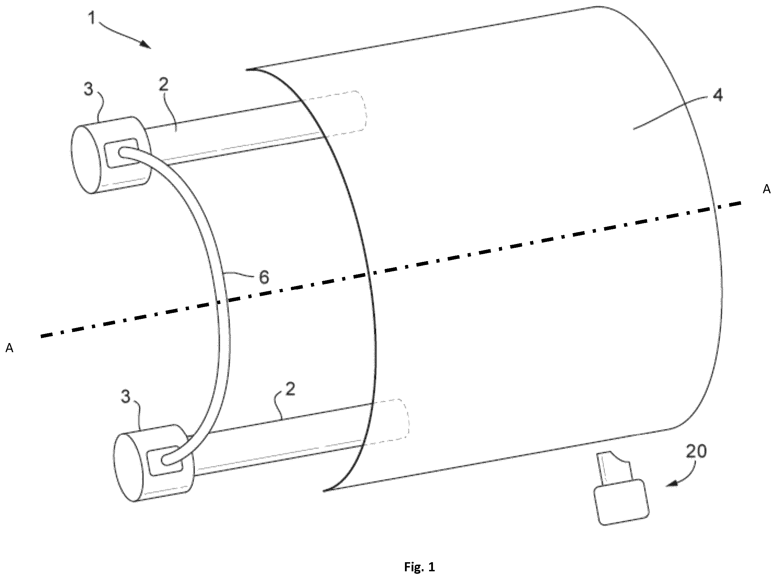

Figure 1 shows a thrust reverser assembly 1 of an engine (e.g., a jet engine) that comprises a thrust reverser actuation system ("TRAS") in the form of a plurality of actuators 2 that are configured to extend and retract a translating cowl 4. Although a single nacelle cowl is shown, typically two are provided per engine, and any number may be provided to suit a particular application. Similarly, the number of actuators may vary and the arrangement shown in Figure 1 should be treated as representative of an example only.

One or more primary locks (not shown) may be included in the thrust reverser actuation system, and are typically located within the housing of the actuators 2. The primary locks may be configured to engage the components of the actuator 2 with which they are configured.

The thrust reverser assembly 1 may further comprise part of the nacelle structure of the engine, in this case the translating cowl 4. The thrust reverser assembly 1 may form part of a cascade type thrust reverser, for example used on a high bypass ratio jet engine. In such an arrangement, the translating cowl 4 may be located on the external surface of the nacelle of the engine. When deployed (i.e., translated from a stowed position to a deployed position), the translating cowl 4 exposes a plurality of cascade vanes, which redirect airflow through the jet engine such that the direction of jet thrust is at least partially reversed.

A power drive unit 3 may be associated with each actuator 2, and may be configured to supply a drive force (e.g., a rotational drive force) to the actuator 2. The actuator 2 may be configured to receive the rotational drive force and, in response thereto, selectively move the translating cowl 4 between its stowed position and deployed position. The power drive units 3 may be operatively connected by a synchronisation mechanism 6, such that the actuators 2 may be driven at substantially the same time.

The lock systems of the present disclosure may be used in many different applications including, but not limited to, lock systems for use in a thrust reverser assembly.

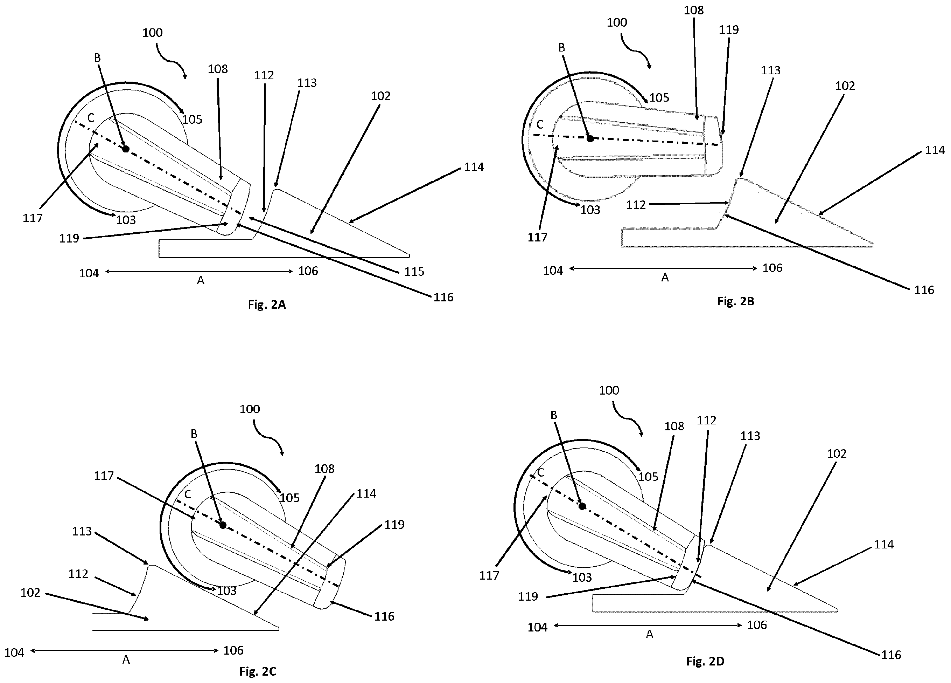

In any example, and referring to the lock system 100 shown in Figures 2A to 2D, the disclosure may provide a lock system 100 for locking a component (not shown) of an aircraft thrust reverser. The component may for example be a translating cowl (such as the cowl 4 of Figure 1), or any other component of the thrust reverser and its actuation system for which it is desired to prevent deployment.

In any example, the lock system 100 comprises a lock member 102 which is configured to be disposed on and movable with the component. The lock member 102 may be configured to be attached to a sleeve (for example the translating cowl 4) or other component to prevent movement of the component along a longitudinal axis A thereof. The lock member 102 is configured to be movable along the longitudinal axis A in a first direction 104 to an open position (see Figure 2C) and in a second direction 106 to a closed position (see Figure 2D).

The lock member 102 comprises a protrusion. The protrusion may extend perpendicular to the longitudinal axis A. The protrusion comprises a sloped contact surface 112. The sloped contact surface 112 may face the first direction 104. The sloped contact surface 112 may be a first sloped contact surface and the protrusion may comprise a second sloped contact surface 114 oriented in an opposing direction to the first sloped contact surface 112. The second sloped contact surface 114 may face the second direction 106. The second sloped contact surface 114 and the first sloped contact surface 112 may extend such that the surfaces join at an intermediate point of the protrusion forming a peak 113. The first sloped contact surface 112 and the second sloped contact surface 114 may slope away from each other such that from the peak 113 the first sloped contact surface 112 extends with a negative gradient in the first direction 104 and the second sloped contact surface 114 extends with a negative gradient in the second direction 106. The first sloped contact surface 112 and second sloped contact surface 114 may have the same gradient. The first sloped contact surface 112 may have a gradient that is greater than a gradient of the second sloped contact surface 114.

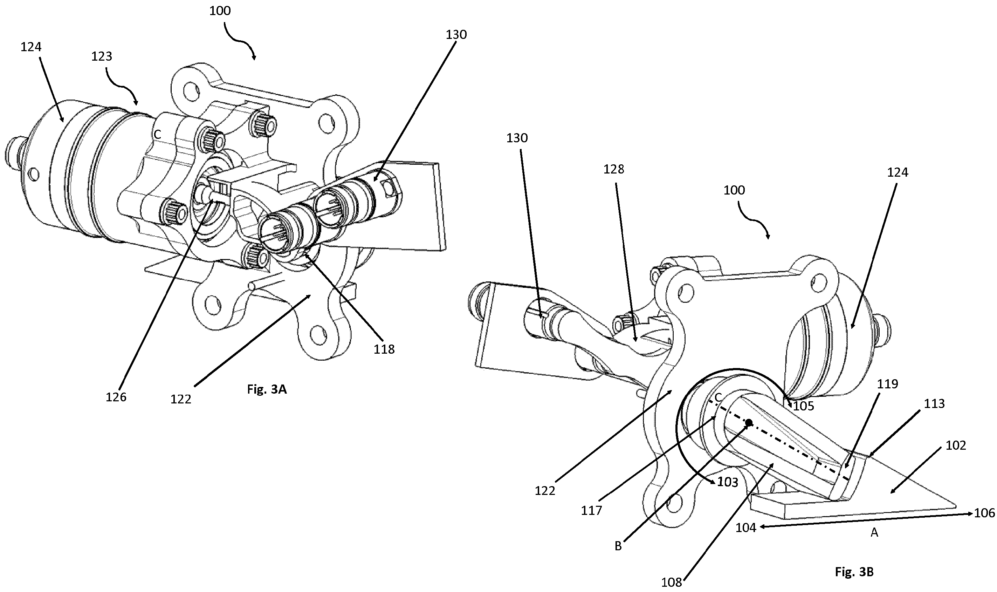

The lock system 100 further comprises a lever 108 pivotable between a locked position and an unlocked position. The lever 108 is pivotably mounted to the lock system 100 such that it can be pivoted in a first direction of rotation 103 into the unlocked position and in a second direction of rotation 105 into the locked position. The lever 108 may be pivotably mounted to the lock system 100 about a rotational axis B. The lock system 100 may further comprise a beam 122 (as seen for example in Figure 3A) which may form part of or be disposed on the thrust reverser assembly. The lever 108 may be attached to the beam 122 at the rotational axis B. The lever 108 may be pivotably mounted to the beam 122 at the rotational axis B. The lever 108 may be mounted via a pin or shaft (not shown) or other attachment means that allows the lever 108 to pivot about the rotational axis B.

The rotational axis B may be located near a proximal end 117 of the lever 108. The lever 108 may extend in a radial direction outwardly from the rotational axis B forming a distal end 119. The lever 108 accordingly comprises a proximal end 117, which is disposed near the point at which the lever 108 is mounted to the lock system. Further, the lever 108 likewise comprises a distal end 119, which is located at the opposing end of the lever 108, directed away from the point at which the lever 108 is mounted to the lock system. The terms 'proximal' and 'distal' as applied to features of the lever 108 will be described by reference to the relative positioning of such features with respect to each other in a proximal-distal direction along a lever main axis C. The lever 108 may be pivotably mounted to a part of the aircraft body (not shown). The lever 108 may have an elongate shape. The width of the lever 108 in a direction perpendicular to the lever main axis C may taper from the proximal end 117 towards the distal end 119 of the lever 108.

The lever 108 comprises a lever locking surface 116 at the distal end 119 of the lever 108. the lever locking surface 116 extends approximately perpendicular to the lever main axis C. Lever 108 has lever locking surface 116 which engages with the lock member 102 in use. Therefore, when the lever 108 is in the locked position and the lock member 102 is in the closed position, the lever locking surface 116 is configured to engage with the sloped contact surface 112 so as to prevent movement of the lock member 102 towards the open position. When the lever 108 is in the unlocked position, the lever 108 is disengaged from the lock member 102 permitting movement of the lock member 102 towards the open position.

The lever locking surface 116 may be a flat surface. The lever locking surface 116 may be a slightly curved surface. The lever locking surface 116 may have chamfered edges to improve the ease of engaging and disengaging the lever locking surface 116 with the sloped contact surface 112 of the lock member 102.

The above features will now be described in relative motion to move the lock system 100 between a locked state and an unlocked state. The lock system 100 can be taken to have three operational phases: a locking phase, an unlocking phase and a relocking phase. The locking phase will also be described during normal operation and during an unwanted deployment.

Figure 2A shows the lock system 100 according to an example in which the lever 108 is in the locked position and the lock member 102 is in the closed position, such that the lock system 100 is in a locked state. In this example, when the lock system 100 is in the locked state, the lever locking surface 116 is aligned with the sloped contact surface 112 such that, in case of unwanted deployment, the lever locking surface 112 is configured to engage with, in some examples to obstruct and / or block the sloped contact surface 112 to prevent movement of the lock member 102 along the longitudinal axis A in the first direction 104. During normal operation, in the locked state, the lever 108 and locking member 102 may not be in contact such that a gap 115 exists between the lever 108 and the lock member 102. Specifically, the gap 115 extends approximately parallel to the lever main axis C between the lever locking surface 116 and the sloped contact surface 112. The gap 115 is considered small enough that during an unwanted deployment of the lock member 102, the minor movement of the lock member 102 that would occur before the lever locking surface 116 engaged with the sloped contact surface 112 is acceptable and the lock member 102 would be prevented to move fully into the open position such that an unwanted deployment would be prevented.

Figure 2D shows the lock system 100 during a prevented unwanted deployment in which axial movement of the lock member 102 along the longitudinal axis A in the first direction 104 into the open position is prevented. During an unwanted deployment, the lever 108 is in the locked position such that movement of the lock member 102 from the closed position towards the open position closes the gap 115 and the lever locking surface 116 engages with the sloped contact surface 112 so as to prevent movement of the lock member 102 further towards the open position.

During an unwanted deployment, the lever 108 engages with the lock member 102. Specifically, the lever 108 engages with the locking surface 112 of the lock member 102. The lever 108 and lock member 102 may become engaged by the lever locking surface 116 coming into contact with the sloped contact surface 112.

During an unwanted deployment, the lever locking surface 116 may be in contact with the sloped contact surface 112 such that the exertion of a force on the lock member 102 in the first direction 104 results in the force being translated in a direction perpendicular to the lever locking surface 116 and the sloped contact surface 112 along the lever main axis C. At least in some examples, the use of a lever 108 allows for the torsional load borne by the lock system 100 to be reduced. This improves the mechanical robustness of the lock system 100 as the load can be translated through high mechanical strength structural components rather than non-structural components.

In an example, during normal operation of the lock system 100 starting from the locked state, as shown in Figure 2A, the lock system 100 may enter the unlocking phase and the lock system 100 may be translated into an unlocked state, as shown in Figure 2B and Figure 2C. During the unlocking phase, the lever 108 is pivoted in a direction away from the lock member 102, for example in the first direction of rotation 103. In this position, the lever 108 is not blocking movement of the lock member 102 along the longitudinal axis A. In this position, the lever 108 extends over, in the examples shown, above, the peak 113 of the lock member 102. When the lever 108 is in the unlocked position the lock member 102 is free to move in the first direction 104 towards the open position. In the unlocked position the movement of the lock member 102 along the longitudinal axis A may extend beyond, beneath in the examples shown, the mounted lever 108.

After the lock member 102 moves into the open position, the lever 108 may be pivoted back into the locked position and the lock system 100 remains in an unlocked state as the lever locking surface 116 is not obstructing the sloped contact surface 112. When the lock member 102 is in the open position and the lever 108 is in the locked position the components are disengaged such that axial movement of the lock member 102 is still permitted along the longitudinal axis A. When the lock member 102 is in the open position and the lever 108 is in the locked position, the relative axial position of the lever 108 to the lock member 102 may be such that the lever main axis C extends adjacent to, in some examples approximately parallel to the second sloped contact surface 114.

From the unlocked state, the lock system 100 may go through a re-locking phase to transition the lock system 100 back into a locked state. During the re-locking phase, the lever 108 may be pivoted in the first direction of rotation 103 into the unlocked position to allow the lock member 102 to move along the longitudinal axis A in the second direction 106 into the closed position. The lock member 102 may be moved, as a result of movement of the component, in the second direction 106 towards the closed position. Once the lock member 102 is in the closed position, the lever 108 may then be rotated in the second direction of rotation 105 into the locked position such that the lever locking surface 116 is configured to engage with, in some examples to block and/or to obstruct, the sloped contact surface 112 resulting in the lock system 100 being in the locked state, as shown in Figure 2A. In this example, during the movement of the lock member 102 from the open position to the closed position, there may be no contact between the lever 108 and the lock member 102 as the lock member 102 is moved into the closed position and the lever 108 is pivoted into the locked position as shown in Figure 2A.

Alternatively, the lever 108 may remain in the locked position as the lock member 102 moves from the open position to the closed position. In this example, the second sloped contact surface 114 may be configured to guide the lever 108 back into engagement with the lock member 102 as the lock member 102 moves in the second direction 106 from the open position to the closed position. In this case, the second sloped contact surface 114 may contact the lever 108 as the lock member 102 moves from the open position to the closed position. During this movement, the lever 108 may be in sliding contact with the second sloped contact surface 114 of the lock member 102 causing the lever 108 to pivot in the first direction of rotation 103 towards the unlocked position. Once contact between the lever 108 and the lock member 102 reaches the peak 113 of the protrusion of the lock member 102, further movement in the second direction 106 causes the lever 108 to contact the sloped contact surface 112 of the lock member 102, hence pivoting the lever 108 back into the locked position. When the lever 108 reaches the locked position, further movement of the lock member 102 into the closed position results in the lock system 100 being back in the locked state as shown in Figure 2A.

In an alternative example, Figure 2D shows the lock system 100 in the locked state during normal operation in which the lever 108 is in the locked position and the lock member 102 is in the closed position. In this example, when the lock system 100 is in the locked state the lever 108 engages with the lock member 102. Specifically, the lever 108 engages with the locking surface 112 of the lock member 102. The lever 108 and lock member 102 may engage by the lever locking surface 116 coming into contact with the sloped contact surface 112. In this example, there is no gap 115 between the lever locking surface 116 and the sloped contact surface 112. During normal operation, the lock system 100 may be in a locked state as shown in Figure 2D.

During an unwanted deployment in such examples, the lever 108 remains engaged with the lock member 102. Specifically, the lever 108 remains engaged with the locking surface 112 of the lock member 102. The lever 108 and lock member 102 may be engaged by the lever locking surface 116 coming into contact with the sloped contact surface 112.

During an unwanted deployment, the lever locking surface 116 may be in contact with the sloped contact surface 112 such that the exertion of a force on the lock member 102 in the first direction 104 results in the force being translated in a direction perpendicular to the lever locking surface 116 and the sloped contact surface 112 along the lever main axis C. At least in some examples, the use of a lever 108 allows for the torsional load borne by the lock system 100 to be reduced. This improves the mechanical robustness of the lock system 100 as the load can be translated through high mechanical strength structural components rather than non-structural components.

The lock system 100 may transition into an unlocked state by firstly transitioning into an unloaded state as shown in Figure 2A whereby the lock member 102 moves in the second direction 106 such that the lock member 102 and lever 108 are no longer in contact. From the unloaded position, the lock system 100 may enter the unlocking phase as shown in Figures 2B and 2C. During the relocking phase, from the unlocked state, the lever 108 may be pivoted into the unlocked position such that the lock member 102 may be moved into the closed position without contacting the lever 108. From the closed position, the lock member 102 may be moved further in the second direction 106 along the longitudinal axis A to allow the lever 108 to be pivoted back into the locked position, as shown in Figure 2A. Following the rotation of the lever 108 into the closed position, the lock member 102 may be moved in the first direction 104 such that the lock member 102 comes into contact with the lever 108 such that the lock system 100 is in the locked state, as shown in Figure 2D.

Figs. 3A and 3B show an example lock system 100 according to the disclosure.

In some examples and as shown in Figures 3A and 3B, the lock system 100 comprises a lock member 102 of the type described above. The lock member 102 may be disposed on or configured to be coupled to a component as described above so as to be moveable along a longitudinal axis A in a first direction 104 towards an open position and in a second direction 106 towards a closed position. The lock system 100 further comprises a lever 108 pivotable between a locked position and an unlocked position as described above. The lever 108 is pivotably mounted to the lock system 100 such that it can be pivoted in the first direction of rotation 103 into the unlocked position and in the second direction of rotation 105 into the locked position.

The lock member 102 may comprise a protrusion having a sloped contact surface 112. The lever 108 may comprise a lever locking surface 116 at a distal end 119 of the lever 108 such that when the lever 108 is in the locked position and during an unwanted deployment of the lock member 102 from the closed position, the lever locking surface 116 is configured to engage with, in some examples to obstruct and/or block, the sloped contact surface 112 so as to prevent movement of the lock member 102 towards the open position. Further, when the lever 108 is in the unlocked position, the lever 108 is disengaged from the lock member 102 permitting movement of the lock member 102 towards the open position.

The lock system 100 may further comprise a beam 122 which may form part of or be disposed on a thrust reverser assembly. The lever 108 may be attached to the beam 122 at the rotational axis B at or near the proximal end 117 of the lever 108. The lever 108 may be pivotably mounted to the beam 122 at the rotational axis B. The lever 108 may be mounted via a pin or shaft (not shown) or other attachment means that allows the lever 108 to pivot about the rotational axis B.

In any example and as shown, the lock system 100 may further comprise a biasing member 118. The lever 108 may be biased via the biasing member 118 into the locked position. The biasing member 118 may be disposed at the proximal end 117 of the lever 108 about the rotational axis B and may take the form of one or more torsion springs. For example, the biasing member 118 may be disposed about a rotating pin or shaft of the lever 108. The biasing member 118 may take other forms, including compression springs and pneumatic and hydraulic cylinder/piston arrangements.

In this and other examples of the lock system 100, the lock system 100 may further comprise a rotary drive 123. The lever 108 may be rotated out of the locked position and into the unlocked position by a rotary drive 123. As show in the example of Figure 3A, the rotary drive 123 may comprise an electromagnet, in this example a solenoid 124, a shaft, in this example a solenoid shaft 126 and a target, in this example a solenoid target 128. In this example, the solenoid target 128 is rotatably coupled to the lever 108 at the rotational axis B. The solenoid target 128 may be coupled to the lever 108 via a pin or shaft or other attachment means disposed along the rotational axis B. In this example, the solenoid target 128 is located on the opposite side of the beam 122 to the lever 108. In this example, the solenoid shaft 126 is disposed at an end of the solenoid 124 such that the solenoid shaft 126 protrudes towards the solenoid target 128. The solenoid 124 and the solenoid shaft 126 are configured such that when the solenoid 124 is energised, the solenoid shaft 126 extends in a direction along the main axis of the solenoid 124 and toward the solenoid target 128 such that the solenoid shaft 126 contacts the solenoid target 128 causing movement of the solenoid target 128. This in turn causes the lever 108 to pivot in the first direction of rotation 103 into the unlocked position.

In an alternative example, the rotary drive 123 may take the form of a motor directly coupled to the lever 108 to directly drive the rotation of the lever 108, with or without an additional gear mechanism to increase the torque capability of the motor. The motor may be a rotary solenoid, a stepper motor, a servo-motor, an induction motor, a brushless DC motor, or anything other type of electrically powered motor known in the art.

In this example of the lock system 100, the lock system 100 may further comprise a position sensor 130 for detecting the position of the lever 108. The position sensor 130 may be for example an induction proximity sensor, a hall-effect sensor, a rotary variable differential transformer or any other suitable type of position sensor. The position sensor 130 may be a single sensor or dual sensor arrangement. The position sensor 130 may be arranged to sense the position of the solenoid target 128, rotatably coupled to the lever 108 at the rotational axis B (as shown) or may be arranged elsewhere to detect the lever position 108, such as sensing directly the tip of the lever 108 near the distal end 119.

The above features of the example of the lock system 100 will now be described in relative motion to move the lock system 100 between the locked state and the unlocked state with reference to Figures 2A to 2D. The lock system 100 can be taken to have three operational phases: a locking phase, an unlocking phase and a relocking phase.

Figure 2A shows the lock system 100, according to an example in which the lever 108 is in the locked position and the lock member 102 is in the closed position, such that the lock system 100 is in a locked state. In this example, when the lock system 100 is in the locked state, the lever locking surface 116 is aligned with the sloped contact surface 1112 such that, in case of unwanted deployment, the lever locking surface 116 is configured to engage with, in some examples to obstruct and/or block the sloped contact surface 112 to prevent movement of the lock member 102 along the longitudinal axis A in the first direction 104. In this example, the lever 108 is biased into the locked position via the biasing member 118 and the lock member 102 is in the closed position. During normal operation, in the locked state, the lever 108 and locking member 102 may not be in contact such that a gap 115 exists between the lever 108 and the lock member 102. Specifically, the gap 115 extends approximately parallel to the lever main axis C between the lever locking surface 116 and the sloped contact surface 112. The gap 115 is considered small enough that during an unwanted deployment of the lock member 102, the minor movement of the lock member 102 that would occur before the lever locking surface 116 engaged with the sloped contact surface 112 is acceptable and the lock member 102 would be prevented to move fully into the open position such that an unwanted deployment would be prevented.

Figure 2D shows the lock system 100 during a prevented unwanted deployment in which axial movement of the lock member 102 along the longitudinal axis A in the first direction 104 into the open position is prevented. During an unwanted deployment, the lever 108 is biased in the locked position via the biasing member 118. Movement of the lock member 102 from the closed position towards the open position closes the gap 115 and the lever locking surface 116 is engaged with the sloped contact surface 112 so as to prevent movement of the lock member 102 further towards the open position.

During the unlocking phase, the lock system 100 may be translated into an unlocked state as shown in Figure 2B and Figure 2C from the locked state as shown in Figure 2A. To reach the unlocked state, the solenoid 124 may be energised such that the solenoid shaft 126 extends and pushes the solenoid target 128 causing movement of the solenoid target 128. The force exerted by the solenoid shaft 126 on the solenoid target 128 overcomes the opposing force exerted by the biasing member 118 to the lever 108 such that the lever 108 is pivoted into the unlocked position, as shown in Figure 2B.

In this position, as seen in Figure 2B, the lever locking surface 116 is no longer blocking movement of the lock member 102 along the longitudinal axis A. Accordingly, when the solenoid 124 is energised the lever 108 is pivoted into the unlocked position which permits the lock member 102 to move in the first direction 104 towards the open position.

After the lock member 102 moves into the open position, lever 108 may be pivoted back into the locked position. In this example, the solenoid 124 may be de-energised causing the solenoid shaft 126 to retract and come out of contact with the solenoid target 128. The biasing member 118 may then bias the lever 108 back into the locked position. The lock system 100 remains in an unlocked state as the lever locking surface 116 is not engaged with the sloped contact surface 112. When the lock member 102 is in the open position and the lever 108 is in the locked position the components are disengaged such that axial movement of the lock member 102 is still permitted along the longitudinal axis A.

After the unlocking phase, the lock system 100 may go through a re-locking phase to transition to lock system 100 back into a locked state. During the re-locking phase, the solenoid may be energised to pivot the lever 108 into the unlocked position to allow the lock member 102 to move in the second direction 106 into the closed position. The lock member 102 may be moved, by the movement of the component, in the second direction 106 towards the locked position. Once the lock member 102 is in the closed position, the solenoid may then be de-energised such that the lever 108 may then be rotated in the second direction of rotation 105 into the locked position such that the lever locking surface 116 is configured to engage with, in some examples to block and/or obstruct, the sloped contact surface 112 resulting in the lock system 100 being in the locked state. During the movement of the lock member 102 from the open position to the closed position, the lever 108 and the lock member 102 are not in contact as the lock member 102 is moved into the closed position and the lever 108 is pivoted into the locked position, as shown in Figure 2A.

Alternatively, the lever 108 may remain in the locked position when the lock member 102 is moved from the open position to the closed position and the second sloping surface 114 may be configured to guide the lever 108 back into engagement with the lock member 102 as the lock member 102 moves in the second direction 106 from the open position to the closed position. In this case, the second sloped contact surface 114 may contact the lever 108 as the lock member 102 moves from the open position to the closed position. During this movement, the lever 108 may be in sliding contact with the second sloped contact surface 114 of the lock member 102 causing the lever 108 to pivot in the first direction of rotation 103 towards the unlocked position. The force exerted on the lock member 102 to move it into the closed position is sufficient to overcome the biasing member 118 to pivot the lever 108. Once contact between the lever 108 and the lock member 102 reaches the peak 113 of the protrusion of the lock member 102, further movement in the second direction 106 causes the lever 108 to contact the sloped contact surface 112 of the lock member 102 and the biasing member 118 pivots the lever 108 back into the lock position. When the lever 108 reaches the locked position, further movement of the lock member 102 into the closed position results in the lock system 100 being back in the locked state, as shown in Figure 2A.

As described above, in an alternative example, Figure 2D shows the lock system 100 in the locked state during normal operation in which the lever 108 is in the locked position and the lock member 102 is in the closed position.

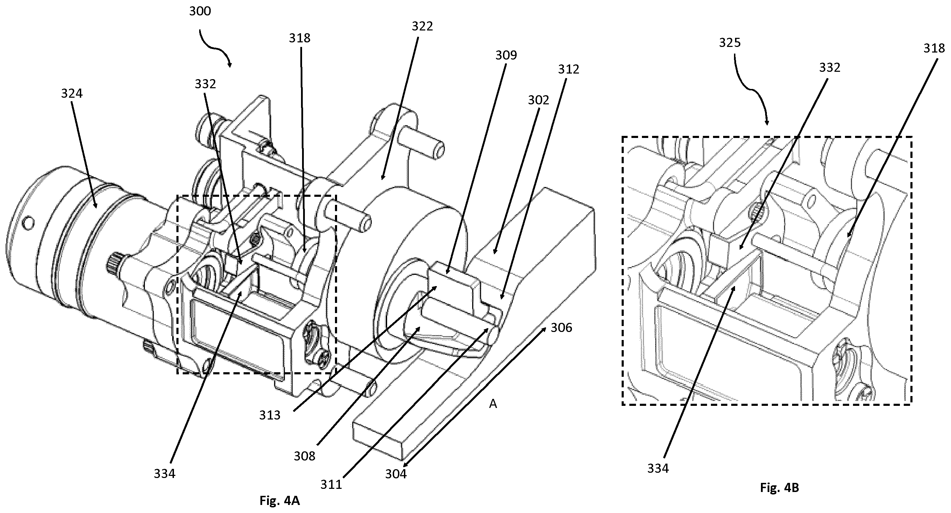

Figures 4A, 4B, 5A, 5B and 6A to 6E show another example of a lock system 300 according to the disclosure. In this example, the lock system 300 may comprise a lever 308, a lock member 302, a beam 322 and position sensors (not shown) which may correspond to lever 108, lock member 102, beam 122 and position sensors 130 as described above.

In the example of the lock system 300, as shown in Figure 4A and 4B, the lock system 300 comprises a lock member 302 configured to be coupled to a component so as to be moveable along a longitudinal axis A in a first direction 304 towards an open position and in a second direction 306 towards a closed position as described above. The lock system 300 further comprises a lever 308 pivotable between a locked position and an unlocked position. The lever 308 is pivotably mounted to the lock system 300 such that it can be pivoted in a first direction of rotation 303 into the unlocked position and in a second direction of rotation 305 into the locked position.

The lock member 302 may comprise a protrusion having a sloped contact surface 312. The lever 308 may comprise a lever locking surface 316 at a distal end 319 of the lever 308 such that when the lever 308 is in the locked position and the lock member 302 is in the closed position, the lever locking surface 316 is configured to engage with the sloped contact surface 312 such that during an unwanted deployment of the lock member 302 from the closed position, the lever locking surface 316 prevents movement of the lock member 302 towards the open position. Further, when the lever 308 is in the unlocked position, the lever 308 is disengaged from the lock member 302 permitting movement of the lock member 302 towards the open position.

The lock system 300 may further comprise a beam 322 which may form part of or be disposed on the thrust reverser assembly. The lever 308 may be attached to the beam 322 at the rotational axis B at or near the proximal end 317 of the lever 308. The lever 308 may be pivotably mounted to the beam 322 at the rotational axis B. The lever 308 may be mounted via a pin or shaft (not shown) or other attachment means that allows the lever 308 to pivot about the rotational axis B.

In this example, the lock system 300 may further comprise a biasing member 318. The lever 308 may be biased via the biasing member 318 into the unlocked position. The biasing member 318 may be disposed at the proximal end 317 of the lever 308 about the rotational axis B and may take the form of a torsion spring. For example, the biasing member 318 may be disposed about a rotating pin or shaft of the lever 308. The biasing member 318 may take other forms, including compression springs, and pneumatic and hydraulic cylinder/piston arrangements.

In the example shown in Figure 4A and 4B, the lever 308 further comprises a lever cam 309 that protrudes outwardly in a radial direction from the rotational axis B at the proximal end 317 of the lever 308. In the example shown, when the lever 308 is in the locked position the lever cam 309 extends from the rotational axis B in a direction approximately perpendicular to the longitudinal axis A. The lever cam may comprise a cam contact surface 313. The cam contact surface 313 may face the first direction 304 when the lever 308 is in the locked position. The cam contact surface 313 may face the first direction of rotation 303.

In the example shown in Figures 4A and 4B, the lock system 300 further comprises a roller 311 which may be movable with the lock member 304 along a path that is parallel to the longitudinal axis A. In this example, the roller 311 is a cylindrical member. The roller 311 is configured to contact the lever cam 309 at the cam contact surface 313 as the lever 308 moves from the locked position to the unlocked position and vice versa.

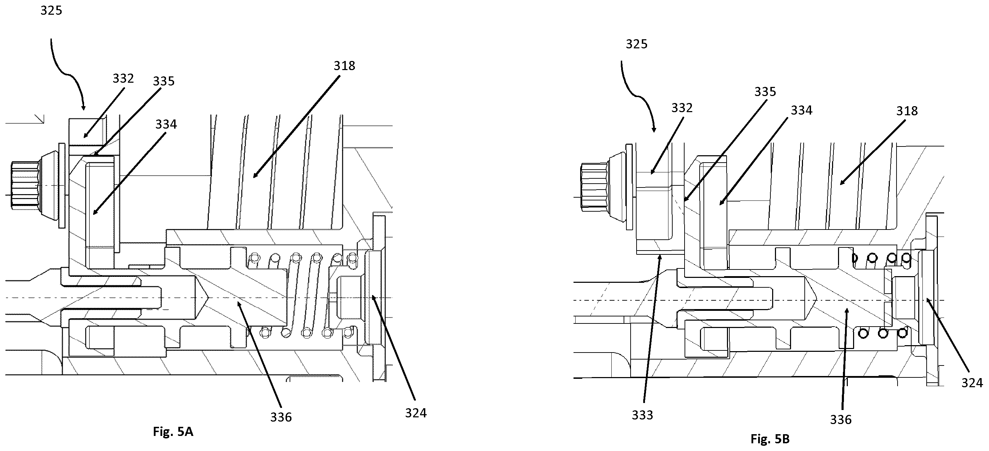

In this example, the lock system 300 further comprises a brake assembly 325, as shown in Figure 5A and 5B. When the brake assembly 325 is engaged, the lever 308 is fixed in the locked position such that movement of the lever 308 is prevented. When the brake assembly 325 is disengaged, movement of the lever 308 is permitted such that the lever 308 is free to pivot between the locked and unlocked positions. The brake assembly 325 may comprise a lock plate 332, a stop plate 334, a stop plate actuator 324, and an actuator shaft 336.

In this example, the lock plate 332 is rotatably coupled to the lever 308 at the rotational axis B. The lock plate 332 may be coupled to the lever 308 via a pin or shaft or other attachment means disposed along the rotational axis. In this example, the lock plate 332 is located on the opposite side of the beam 322 to the lever 308. The lock plate 332 may protrude outwardly in a radial direction from the rotational axis B. The lock plate 332 may comprise a lock plate locking surface 333 which faces the first direction of rotation 305 about the rotational axis B.

When the lock system 300 is in the locked state, the stop plate 334 is positioned beneath the lock plate 332 such that the lock plate 332, and therefore the lever 308 is prevented from pivoting into the unlocked position. In the locked state, the lock plate locking surface 333 is in contact with the stop plate 334 preventing movement of the lock plate 332. The stop plate 334 is connected to the stop plate actuator 324 via the actuator shaft 336 such that the stop plate 334 is movable along a direction of actuation of the stop plate actuator 324.

In an alternative example, the brake assembly 325 may take other form. In particular, the brake assembly 325 may use another motor. The motor may be a rotary solenoid, a stepper motor, a servo-motor, an induction motor, a brushless DC motor, or anything other type of electrically powered motor known in the art.

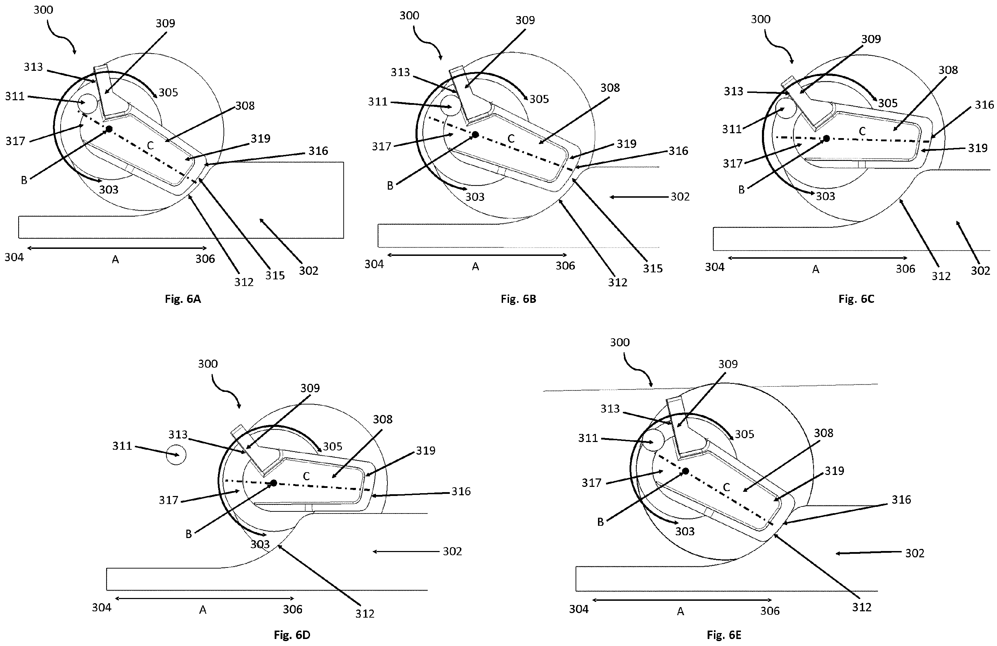

The above features of the example of the lock system 300 will now be described in relative motion to move the lock system 300 between the locked position and the unlocked position with reference to Figures 6A to 6E. The lock system 300 can be taken to have three operational phases: a locking phase, an unlocking phase and a relocking phase.

Figure 6A shows the lock system 300 according to an example in which the lever 308 is in the locked position and the lock member 302 is in the closed position, such that the lock system 300 is in a locked state. In this example, when the lock system 300 is in the locked state, the lever locking surface 316 is aligned with the sloped contact surface 312 such that, in case of unwanted deployment of the lock member 302 from the closed position, the lever locking surface 316 is configured to engage with, in some examples to obstruct and/or to block the sloped contact surface 312 to prevent movement of the lock member 302 along the longitudinal axis A in the first direction 304. In this example, the lever 308 is in the locked position and the lock member 302 is in the closed position. During normal operation, in the locked state, the lever 308 and locking member 302 may not be in contact such that a gap 315 exists between the lever 308 and the lock member 302. Specifically, the gap 315 extends approximately parallel to the lever main axis C between the lever locking surface 316 and the sloped contact surface 312. The gap 315 is considered small enough such that during an unwanted deployment of the lock member 302, the minor movement of the lock member 302 that would occur before the lever locking surface 116 engaged with the sloped contact surface 112 is acceptable and the lock member 302 would be prevented to move fully into the open position such that an unwanted deployment would be prevented. In the locked state, the lever 308 is in the locked position. The lever 308 is held in the locked position via the brake assembly 325 preventing movement of the lever 308 into the unlocked position. Movement of the lever 308 is prevented by the lock plate locking surface 333 contacting the stop plate 334 preventing movement of the lock plate 332 into the unlocked position.

Figure 6E shows the lock system 300 during an unwanted deployment, in which the lock system 300 is in a locked state such that axial movement of the lock member 302 along the longitudinal axis A in the first direction 304 into the open position is prevented. During an unwanted deployment, the lever 308 is held in the locked position by the brake assembly 325 such that movement of the lock member 302 from the closed position towards the open position closes the gap 315 and the lever locking surface 316 engages with the sloped contact surface 312 so as to prevent movement of the lock member 302 further towards the open position.

During the unlocking phase, the lock system 300 may be translated into an unlocked state as shown in Figure 6B, Figure 6C and Figure 6D. To reach the unlocked state, the actuator 324 may be activated such that the actuator shaft 336 retracts towards the stop plate actuator 324 and moves the stop plate 334 towards the actuator 324 and out of contact with the lock plate locking surface 333. When the stop plate 334 is not in contact with the lock plate locking surface 333, the lock plate 332 is permitted to move. As the lever 308 is biased by the biasing member 318 into the unlocked position and the lever 308 is rotatably coupled to the lock plate 332, the movement of the stop plate 334 out of contact with the lock plate locking surface 333 causes both the lock plate 332 and the lever 308 to pivot about the rotational axis B in the first direction of rotation 303. The lever 308 pivots in the first direction rotation 303 until the lever cam 309 comes into contact with the roller 311 at the cam contact surface 313, as shown in Figure 6B.

From the state shown in Figure 6B, in which the brake assembly 325 is disengaged, as the lock member 302, moves along the longitudinal axis A in the first direction 304 toward the open position the roller 311, which is movably coupled to the lock member 302 also moves along a path approximately parallel to the longitudinal axis A in the first direction 304. As the cam contact surface 313 is maintained in contact with the roller 311 by the biasing member 318, the movement of the roller 311 in the first direction 304 allows the lever cam 309 to pivot in the first direction of rotation 303 such that the lever cam 309 and the lever 308 pivot into the unlocked position, as shown in Figure 6C. When the lever 308 is in the unlocked position, the lever 308 is disengaged from the lock member 302 such that further movement of the lock member 302 along the longitudinal axis A in the first direction 304 into the open position is permitted. In the open position, the lever cam 309 may no longer be in contact with the roller 311, as shown in Figure 6D.

As the lock plate 332 pivots from the locked position to the unlocked position, the stop plate actuator 324 may be deactivated causing the stop plate 334 to extend away from the actuator 324 and into contact with a side surface 335 of the lock plate 332. The stop plate 334 and the side surface 335 of the lock plate 332 may be in sliding contact such that the contact between stop plate 334 and the side surface 335 of the lock plate 332 does not impact the pivoting of the lock plate 332 between the locked and unlocked positions.

After the unlocking phase, the lock system 300 may go through a re-locking phase to transition, the lock system 300 back into a locked state, as shown in Figure 6A. During the re-locking phase, the lock member 302 is moved in the second direction 306 from the open position to the closed position. As the roller 311 is movable with the lock member 302 along a path parallel to the longitudinal axis A, the roller 311 also moves in the second direction 306. As the roller 311 moves in the second direction 304, the roller 311 comes into contact with the lever cam 309 and pushes against the lever cam 309. The roller 311 exerts a force on the lever cam 309 that is sufficient to overcome the torsional force applied by biasing member 318 and so pivots the lever 308 in the second direction of rotation 305 into the locked position. As the lever 308 pivots into the locked position, the lock plate 332 also pivots into the locked position allowing the stop plate 334 to move beneath the lock plate 332 and come into contact with the lock plate locking surface 333 so as to engage the brake assembly 325. During the re-locking phase, the stop plate actuator 324 may be activated such that the stop plate 334 is moved away from and not in contact with the lock plate 332. Once the lock plate 332 is pivoted into the locked position, the stop plate actuator 324 may be deactivated causing the stop plate 334 to move away from the actuator 324 and come into contact with the lock plate locking surface 333 preventing movement of the lock plate 332 toward the unlocked position. Alternatively, the stop plate actuator 324 may be deactivated for the entire duration of the re-locking phase and the side surface 335 of the lock plate 332 may be in sliding contact with stop plate 334 as the lock plate 332 pivots from the unlocked position to the locked position. Once the brake assembly 325 is engaged, the lever 308 is fixed in the locked position and the lock member 302 is in the closed position such that the lock system 300 is in the locked state as shown in Figure 6A.

As described above, in relation to Figure 2D, in an alternative example, when the lock system 302 is in the locked state during normal operation such that the lever 308 is in the locked position and the lock member 302 is in the closed position, the lever 308 and the lock member 302 may be in contact, as shown in Figure 6E. During an unwanted deployment in such examples, the lever 308 remains engaged with the lock member 302. Specifically, the lever 108 remains engaged with the locking surface 312 of the lock member 302. The lever 308 and lock member 302 may be engaged by the lever locking surface 316 coming into contact with the sloped contact surface 312.

During an unwanted deployment, the lever locking surface 316 may be in contact with the sloped contact surface 312 such that the exertion of a force on the lock member 302 in the first direction 304 results in the force being translated in a direction perpendicular to the lever locking surface 316 and the sloped contact surface 312 along the lever main axis C. At least in some examples, the use of a lever 308 allows for the torsional load borne by the lock system 300 to be reduced. This improves the mechanical robustness of the lock system 300 as the load can be translated through high mechanical strength structural components rather than non-structural components.

It will be understood that, in any example of the disclosure, the lock system may be formed from any suitable material. At least in some examples, at least the lock member and the lever may be made of metal, for example steel.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A lock system for locking a component of an aircraft thrust reverser, the lock system comprising:
a lock member configured to be moveable with the component in a first direction towards an open position and in a second direction towards a closed position; and
a lever pivotable between a locked position and an unlocked position,
wherein the lever comprises a lever locking surface at a distal end thereof,
wherein the lock member comprises a protrusion having a sloped contact surface,
wherein, when the lever is in the locked position and during an unwanted deployment of the lock member from the closed position, the lever locking surface is configured to engage with the sloped contact surface so as to limit movement of the lock member towards the open position, and
wherein, when the lever is in the unlocked position, the lever is configured to disengage from the lock member permitting movement of the lock member towards the open position.

2. The lock system of claim 1, wherein the lever is pivotable about an axis of rotation and extends outwardly therefrom in a radial direction.

3. The lock system of claim 2, wherein the lever locking surface extends approximately perpendicular to the radial direction.

4. The lock system of any preceding claim, wherein the sloped contact surface is a first sloped contact surface facing the first direction.

5. The lock system of any preceding claim, further comprising a beam wherein the lever is pivotably mounted to the beam; and wherein the lock member is moveable relative to the beam in the first and second directions.

6. The lock system of claim 4, wherein the protrusion comprises a second sloped contact surface facing the second direction.

7. The lock system of any preceding claim, further comprising a rotary drive configured to pivot the lever.

8. The lock system of claim 7, wherein the rotary drive comprises:
a solenoid or electromagnet;
a shaft; and
a target rotatably coupled to the lever, wherein activation of the solenoid or electromagnet causes the shaft to extend and rotate the target so as to pivot the lever.

9. The lock system of any preceding claim, further comprising a biasing member configured to bias the lever into the locked position.

10. The lock system of claim 9 when dependent on claim 7 or 8, wherein the rotary drive is configured to pivot the lever into the unlocked position.

11. The lock system of any of claims 1 to 5, further comprising:
a biasing member configured to bias the lever into the unlocked position; and
a brake assembly configured to hold the lever in the locked position when the brake assembly is engaged.

12. The lock system of claim 11, further comprising:
a lever cam extending from the lever; and
a roller movable with the lock member along a path parallel to the first direction,
wherein, when the lock member moves in the second direction towards the closed position, the roller pushes against the lever cam causing the lever to pivot into the locked position.

13. The lock system of any preceding claim, further comprising:
one or more position sensors; and
a control unit to detect via the one or more position sensors a position of the lever.

14. The lock system of any preceding claim, wherein the lock system is a primary or tertiary lock for an aircraft thrust reverser.

15. A thrust reverser assembly comprising the lock system as claimed in any preceding claim.
